# EUROPÄISCHE PATENTSCHRIFT

(11) **EP 2 485 932 B1**
(45) Veröffentlichungstag und Bekanntmachung des Hinweises auf die Patenterteilung: **28.08.2013**
(21) Anmeldenummer: 10765615.9
(22) Anmeldetag: 05.10.2010
(51) Int. Cl.: B61C 17/04, B61D 17/02, B61D 17/10

(54) **BODENWANNE FÜR HOCHGESCHWINDIGKEITS-ZÜGE**
FLOOR PAN FOR HIGH-SPEED TRAINS
CARÉNAGE DE DESSOUS DE CAISSE POUR TRAINS À GRANDE VITESSE

(30) Priorität: 08.10.2009 RU 2009137236
(43) Veröffentlichungstag der Anmeldung: 15.08.2012
(73) Patentinhaber: Siemens Aktiengesellschaft, 80333 München (DE); Offene Aktiengesellschaft "Russische Eisenbahnen", 107174 Moskau (RU)
(72) Erfinder: BAUMANN, Thomas, 97084 Würzburg (DE); BERNHARDT, Stefan, 90592 Schwarzenbruck/ Lindelburg (DE); MANGLER, Rüdiger, 47802 Krefeld (DE); IGOREVITSCH, Tschernomaz Georgij, 141070 Moskauer Gebiet (RU); NIKOLAEVITSCH, Jagovkin Andrej, 140121 Moskauer Gebiet (RU); VLADIMIROVITSCH, Pegov Dmitrij, 196247 Sankt-Petersburg (RU)
(74) Vertreter: Wolff, Harry
(86) Internationale Anmeldenummer: PCT/EP2010/064802
(87) Internationale Veröffentlichungsnummer: WO 2011/042419

(56) Entgegenhaltungen:
- EP-A1- 0 063 214
- WO-A1-2006/021514
- CA-A1- 2 313 834
- US-A- 2 143 547
- US-A1- 2002 029 721

## Beschreibung

Die Erfindung bezieht sich auf eine Bodenwanne für Hochgeschwindigkeits-Züge, gehört zum Schienenverkehrsbereich und kann zur Bildung von HGV-Personenzügen eingesetzt werden. Im Einzelnen bezieht sich die Erfindung auf eine Bodenwanne für Hochgeschwindigkeits-Züge, die unter einen Wagenfußboden auf einer gesamten Unterflurraumlänge anzuordnen und als ein Gerüst ausgeführt ist, das mit einem Schutzboden und seitlichen Tragwänden mit den darauf befestigten Seitenplatten verkleidet ist. Eine solche Bodenwanne ist beispielsweise aus der US-A-2 143 547 bekannt.

Die ganze bisherige Geschichte des Eisenbahnverkehrs ist mit dem Streben nach Erhöhung der Zugbetriebsgeschwindigkeiten, Minimierung der Fahrtzeiten, Erhöhung der Ausnutzung von Streckenverkehrskapazitäten und des Fahrgastkomforts verbunden.
Der Landverkehr bedeutet heute einen Eisenbahnverkehr, bei welchem für die Züge Fahrgeschwindigkeiten von über 200 km/h sichergestellt werden.

In der Technik ist heute ein Wagenkasten für ein Hochgeschwindigkeitsfahrzeug bekannt (s. SU 1652150 A1, Kl. B62D 35/00, Veröffentlichungsdatum: 30.05.1991). Die bekannte Erfindung gehört zum Verkehrsbereich, vorwiegend zu den Schnellfahrzeugen für den Schienenverkehr. Der Wagenkasten des bekannten Fahrzeugs besteht aus einem oberen und einem unteren Kopfteil. Zur Effektivitätserhöhung durch Reduzierung des aerodynamischen Widerstands erfolgt die Verbindung des unteren Endteils mit dem oberen über Gelenkelemente, wobei auf der Innenseite des oberen Teils im Verbindungsbereich Führungsleisten zur Zusammenwirkung mit den o.g. Zugstangen fest montiert sind.
Die bekannte technische Lösung weist enge Betriebsmöglichkeiten auf, da im Raum unter dem Wagenfußboden auf der gesamten Raumlänge keine Schutzelemente vorgesehen sind, weswegen hier turbulente Luftströme entstehen, die zur Erhöhung der Energieverluste führen.

In der Technik ist heute ein zum Betrieb in Schienensystemen mit Schotter-Gleisoberbau vorgesehenes Fahrzeug bekannt (s. WO 2006/021514, K1. B61D17/02, Veröffentlichungsdatum: 02.03.2006).

Das bekannte Fahrzeug zum Betrieb in Schienensystemen mit Schotter-Gleisoberbau zeichnet sich dadurch aus, dass der untere Fahrzeugteil mit durch Reflektionselementen gebildeten Schutzschirmen ausgestattet ist, die für den Schutz für die senkrecht zur Fahrrichtung verlaufenden Fahrzeug- und Fahrzeugkomponentenflächen sorgen, wobei diese Reflektionselemente so ausgeführt und angeordnet sind, dass die fliegenden Schottersteine zur Fahrgegenrichtung abgelenkt werden.
Die mit der bekannten Erfindung gelöste Aufgabe besteht in der Sicherstellung eines Schutzes für den Unterflurraum, in welchem Fahrmotor, Radsatzwellen, Traversen, Queraufnahmen usw. angeordnet sind, vor dessen Beschädigung durch Schottersteine.
Die bekannte Erfindung löst jedoch nicht die Aufgabe, eventuelles Entstehen turbulenter Ströme um Wagenunterflurraum zu verhindern, die ihrerseits den Zugbetrieb beeinträchtigen.

Ausgehend hiervon liegt der Erfindung die Aufgabe zu Grunde einen qualitätsgerechten Ausrüstungsschutz im Hochgeschwindigkeitsbetrieb und das Ausschließen des Verdringens von Stein-, Staub- und Schneegrobpartikeln in den Innenraum sicher zu stellen sowie Betriebsbedingungen für die Unterflurausrüstungen bei gleichzeitig zu erzielender Aufrechterhaltung der aerodynamischen Unterflurraumeigenschaften zu verbessern.

Die vorstehende Aufgabe wird dadurch gelöst, dass das Gerüst bogenförmige Stützen darstellt, die an Wagenkasten-Längsbalken jeweils in entgegengesetzter Richtung zueinander anzubinden sind und durch Verbindung freier Stützenden ein Querprofil mit Kraftverschluss bilden. Daraus ergibt sich als Vorteil eine Realisierung einer Bodenwanne mit guter Aerodynamik und erhöhten Festigkeits- und Verdichtungseigenschaften, insbesondere in Bereichen der Anbindung von beweglichen Platten an feste Wagenkastenelemente.

Dabei können die als Zellenkonstruktionen ausgeführten Seitenplatten auf den Seitenwänden ausbaubar montiert sein, wozu lösbare Verbindungen in Form von Schrauben verwendet werden können, die jeweils innerhalb eines in der Seitenplatte befestigten Topfs angeordnet sind, der auf seiner Innenfläche mit einem Feststellring zur Vorbeugung des Schraubenherausfallens versehen ist, wobei der Topf über ein Gewinde ins Gerüst hineingedreht und im Gerüst mit einem Rastelement festgestellt werden kann. Daraus kann sich eine erhöhte Zuverlässigkeit der lösbaren Verbindungen ergeben, die das Herausfallen von Verbindungselementen ausschließt. Das Gerüst stellt dabei bogenförmige Stützen dar, die an die Wagenkasten-Längsbalken jeweils in entgegengesetzter Richtung zueinander angebunden sind und bei Verbindung der freien Stützenden ein Querprofil mit Kraftverschluss bilden.
Auf einzelnen Seitenplatten im Bereich der Wagenaggregate können Wartungsklappen ausgeführt sein. Darüber hinaus können einzelne Seitenplatten mit zur Belüftung dienenden Gitteröffnungen versehen sein. In einer der Ausführungsformen können die Gerüststützen in der Diagonalrichtung mit Spannbalken aus hochfestem Stahl verbunden werden.
In einer Einzelausführung kann der Schutzboden als Schilder ausgeführt werden, die neben den lösbaren Verbindungen auch mit steuerbaren Rastelementen ausgestattet werden können.
Die geschlossene Gerüstausführung, die versteifte Zellenbauweise der seitlichen Tragwände mit den daran angebundenen Seitenplatten sowie mit den Schutzbodenschildern, welche die tragende Kraftschluss-Raumhülle bilden, die an den Wagenkasten des HGV-Zuges geschlossen wird, schließt das Entstehen turbulenter Ströme sowohl außerhalb der Bodenwanne als auch im deren Innenraum aus, wodurch eine Verbesserung von Festigkeitseigenschaften und Verdichtungsbedingungen erzielt wird, was eine positive Bedeutung für die aerodynamischen Zugeigenschaften und die Fahrgeschwindigkeit hat.

Die Seitenplattenmontage an den Seitenwänden mit lösbaren Verbindungen sicherstellt eine schnelle und leichte Montage/Demontage der angebotenen Konstruktion.
Die Ausführung der lösbaren Verbindungen als Schrauben, von welchen jede innerhalb eines Topfs angeordnet ist, der in der Seitenplatte festgestellt und mit einem Feststellring auf der Innenfläche versehen ist, erhöht die Festigkeit der angebotenen Bodenwanne für HGV-Züge. Darüber hinaus ermöglicht diese Ausführung der lösbaren Verbindung die Reduzierung von Schwingungen, was beim Betrieb der HGV-Züge besonders wichtig ist. Die Schraube hat auf der Innenfläche einen Feststellring zum Ausschließen des Schraubenherausfallens, wodurch eine zusätzliche Zuverlässigkeit der Konstruktion erzielt wird.
Die Gerüstausführung in Form von bogenförmigen Stützen, die an die Längsbalken des HGV-Zugwagenkastens in jeweils entgegengesetzter Richtung zueinander angeordnet sind und bei Verbindung der freien Stützenden ein Querprofil mit Kraftverschluss bilden, ermöglicht die Erzielung einer hohen Festigkeit.
Das Versehen einzelner Seitenplatten mit Wartungsklappen im Bereich der Wagenaggregate ist durch die Wartungsnotwendigkeit bedingt.
Darüber hinaus sind einzelne Seitenplatten zur Sicherstellung der erforderlichen Lüftung mit Gitteröffnungen versehen.

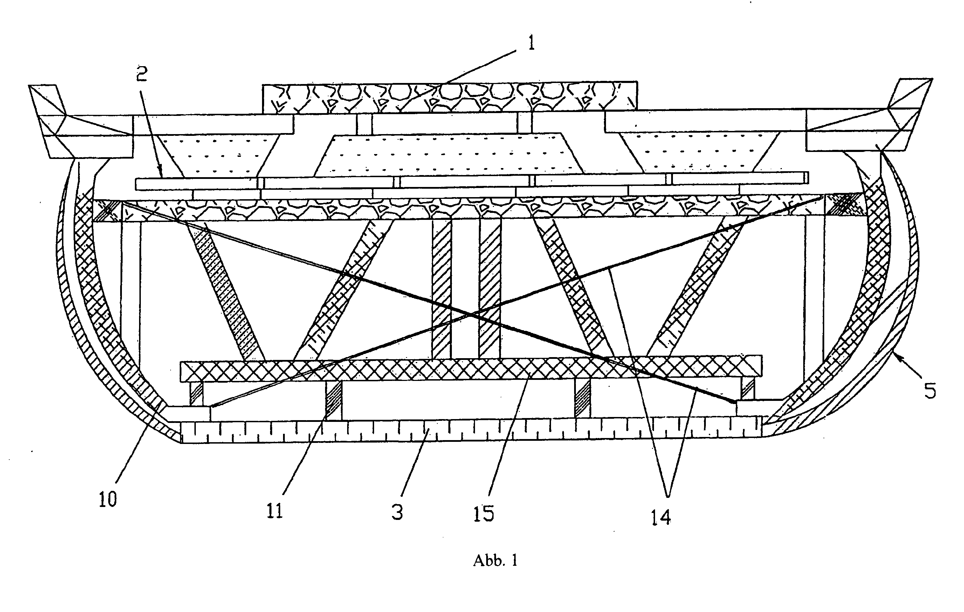

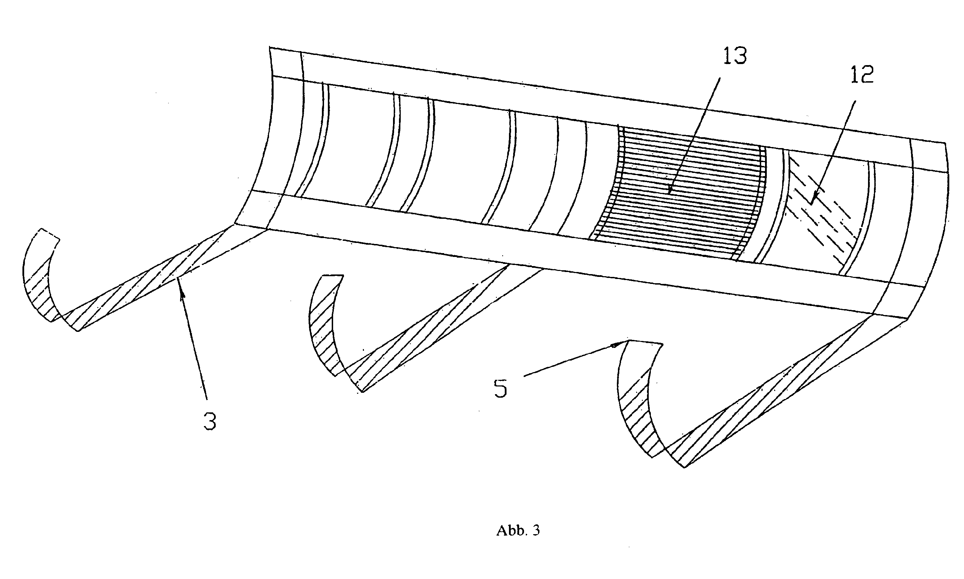

Die Ausführung der Gerüststützen als in Diagonalrichtung verbundene Spannbalken aus hochfestem Stahl sicherstellt eine zusätzliche Gerüstfestigkeit.
Der Schutzboden kann aus Schildern mit erhöhter Festigkeit ausgeführt werden, die neben den lösbaren Verbindungen auch mit steuerbaren Rastelementen ausgestattet werden können, die das Schildherausfallen bei dessen Demontage verhindern.
Die vorstehend beschriebenen Merkmale sind bedeutsam und weisen einen Ursache-Folge-Zusammenhang miteinander auf, wodurch eine Gesamtheit von wesentlichen Merkmalen gebildet wird, die zur Lösung der Aufgabe - Erweiterung der Betriebsmöglichkeiten bei gleichzeitig zu erzielender Erhöhung der Festigkeitseigenschaften - erforderlich und ausreichend sind.

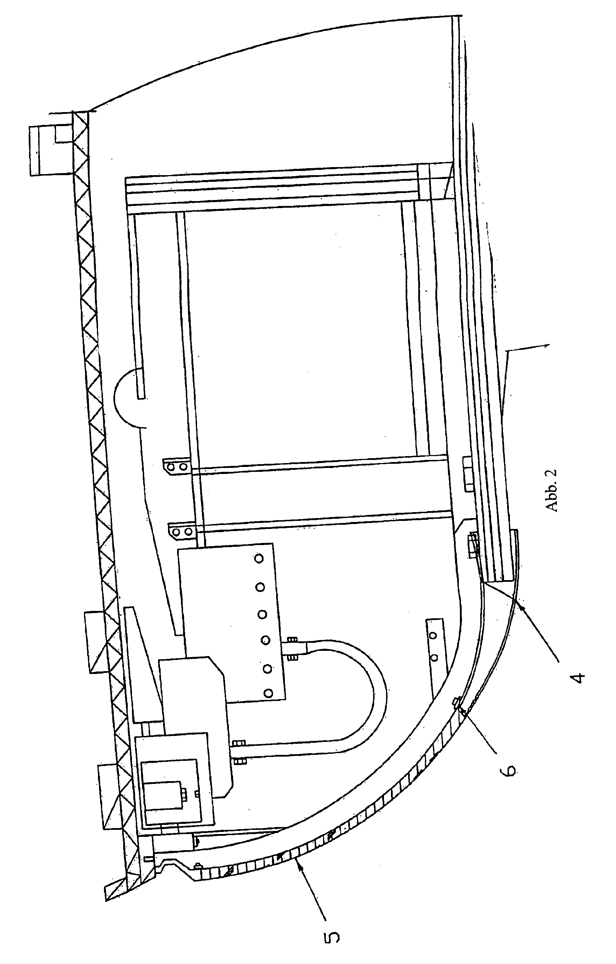

Fig. 2 - teilweiser Schnitt der Bodenwanne;
Fig. 1 - Schnitt der Bodenwanne mit Querspannbalken aus Edelstahl;
Fig. 3 - 3D-Segment der Bodenwanne mit Versteifungselementen;
Fig. 4 - lösbare Verbindung.
Die angebotene Bodenwanne für HGV-Züge wird unter dem Fußboden 1 des Wagens auf der gesamten Fußbodenlänge angeordnet und als Gerüst 2 (s. Fig. 3) ausgeführt, welches mit einem Schutzboden 3 und den seitlichen Tragwänden 4 mit den darauf befestigten Seitenplatten (Fig. 1, 2) verkleidet ist. 1, 2). Die Seitenplatten 5 sind als Zellenkonstruktionen ausgeführt und auf den Seitenwänden 4 mit lösbaren Verbindungen ausbaubar montiert. Die lösbaren Verbindungen sind als Schrauben 6 ausgeführt, wobei jede Schraube innerhalb des Topfs 7 (s. Fig. 5) eines in der Seitenplatte befestigten Topfs angeordnet ist, der auf seiner Innenfläche mit einem Feststellring 8 zur Vorbeugung des Herausfallens der Schraube 6 versehen ist, wobei der Topf über ein Gewinde ins Gerüst hineingedreht und im Gerüst mit einem mutterförmigen Rastelement 9 festgestellt wird.

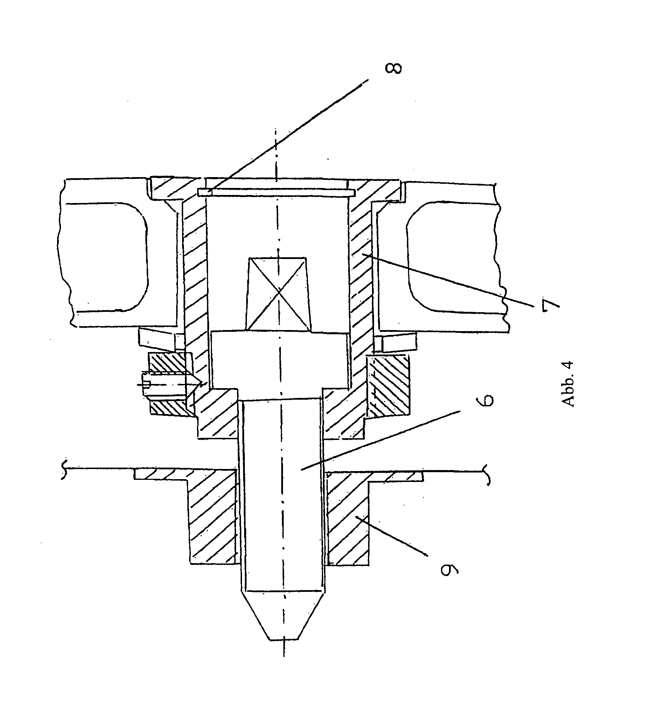

Das Gerüst stellt bogenförmige Stützen 10 dar, die an die Längsbalken 11 (s. Fig. 3) des HGV-Zugwagenkastens jeweils in entgegengesetzter Richtung zueinander angebunden sind und bei Verbindung der freien Stützenden ein Querprofil mit Kraftverschluss bilden.
Einzelne Seitenplatten 5 im Bereich der Wagenaggregate sind mit Wartungsklappen 12 zur Wartung dieser Aggregate ausgeführt.
Einzelne Seitenplatten 5 sind mit Gitteröffnungen 13 zur Belüftung versehen (s. Fig. 4).
Möglich ist auch eine Ausführung der Bodenwanne, bei welcher die Gerüststützen in der Diagonalrichtung mit Spannbalken 14 (s. Fig. 3) verbunden sind, wozu eine Festigkeitserhöhung für das Gerüst 2 erzielt wird.

Der Schutzboden 3 ist aus Schildern mit erhöhter Festigkeit ausgeführt. Die Schilder sind neben den lösbaren Verbindungen auch mit steuerbaren Rastelementen ausgestattet, die das Schildherausfallen bei der Demontage verhindern.

Die Montage der angebotenen Bodenwanne für HGV-Züge erfolgt wie nachstehend.
Die bogenförmig ausgeführten Stützten 10 werden in die Nutensteine auf dem Längsauflager 15 hineingedreht. Die Stützen 10 werden auch an den Randlängsbalken 11 des HGV-Zugwagenkastens jeweils in entgegen gesetzter Richtung zueinander so befestigt, das die freien Enden der Stützbalken 10 ein Querprofil mit Kraftverschluss bilden.

Anschließend wird das Gerüst 2 mit dem Schutzboden 3 und den seitlichen Tragwänden 4 mit darauf befestigten Seitenplatten 5 verkleidet. Die Seitenplatten 5 sind als Zellenkonstruktionen ausgeführt.
Die Seitenplatten 5 sind als Zellenkonstruktionen ausgeführt. Die Befestigung der Seitenplatten 5 auf den Seitenwänden 4 erfolgt mit lösbaren Verbindungen in Form der Schrauben 6, welche die Demontage ermöglichen. Jede Schraube 6 wird innerhalb eines Topfs 7 (s. Fig. 5) angeordnet, der in der Seitenplatte 5 festgestellt wird. Die Schrauben 6 sind mit je einem Feststellring 8 versehen, der das Schraubenherausfallen vollständig ausschließt. Einzelne Seitenplatten 5 im Bereich der Wagenaggregate sind mit Wartungsklappen 12 ausgeführt (s. Fig. 4).
Einzelne Seitenplatten sind mit Gitteröffnungen 13 zur Belüftung versehen (s. Fig. 4).
In einer Einzelausführung des Gebrauchsmodells werden die bogenförmigen Stützen 10 des Gerüstes 2 in der Diagonalrichtung mit Spannbalken 14 verbunden, wodurch eine Erhöhung der Festigkeitseigenschaften für das Gerüst 2 erzielt wird. In einer der Gebrauchsmodellausführungen wird der Schutzboden 3 aus Schildern mit erhöhter Festigkeit ausgeführt.
Somit ermöglicht die angebotene Bauweise der Bodenwanne den Einsatz derselben für die Wagen der HGV-Züge, wobei ein zuverlässiger Schütz für die Unterflurausrüstungen von Steinen, Staub und Schnee sowie eine Erweiterung der Betriebsmöglichkeiten und eine zur Erhöhung der Fahrgeschwindigkeiten führende Verbesserung der aerodynamischen Eigenschaften erzielt werden.

## Patentansprüche

1. Bodenwanne für Hochgeschwindigkeits-Züge, die unter einem Wagenfußboden (1) auf einer gesamten Unterflurraumlänge anzuordnen und als ein Gerüst (2) ausgeführt ist, das mit einem Schutzboden (3) und seitlichen Tragwänden (4) mit den darauf befestigten Seitenplatten (5) verkleidet ist,
**dadurch gekennzeichnet, dass**
das Gerüst (2) bogenförmige Stützen (10) darstellt, die an Wagenkasten-Längsbalken (11) jeweils in entgegengesetzter Richtung zueinander anzubinden sind und durch Verbindung freier Stützenden ein Querprofil mit Kraftverschluss bilden.

2. Bodenwanne nach Anspruch 1,
**dadurch gekennzeichnet, dass**
die Seitenplatten (5) als Zellenkonstruktionen ausgeführt und auf Seitenwänden (4) ausbaubar montiert sind.

3. Bodenwanne nach Anspruch 2,
**dadurch gekennzeichnet, dass**
zur Montage der Seitenplatten (5) auf den Seitenwänden (4) lösbare Verbindungen in Form von Schrauben (6) eingesetzt sind.

4. Bodenwanne nach Anspruch 3,
**dadurch gekennzeichnet, dass**
die Schrauben (6) innerhalb eines in zugehörigen Seitenplatten (5) befestigten Topfs (7) angeordnet sind.

5. Bodenwanne nach Anspruch 4,
**dadurch gekennzeichnet, dass**
der Topf (7) auf seiner Innenfläche mit einem Feststellring (8) zur Vorbeugung eines Schraubenherausfallens versehen ist.

6. Bodenwanne nach einem der Ansprüche 4 oder 5,
**dadurch gekennzeichnet, dass**
der Topf (7) über ein Gewinde in das Gerüst (2) hineingedreht und in dem Gerüst (2) mit einem Rastelement (4) befestigt ist.

7. Bodenwanne nach einem der Ansprüche 1 oder 6,
**dadurch gekennzeichnet, dass**
einzelne Seitenplatten (5) im Bereich von Wagenaggregate mit Wartungsklappen (12) ausgeführt sind.

8. Bodenwanne nach einem der Ansprüche 1 oder 7,
**dadurch gekennzeichnet, dass**
einzelne Seitenplatten (5) mit Gitteröffnungen (1b) versehen sind.

9. Bodenwanne nach einem der Ansprüche 1 oder 8,
**dadurch gekennzeichnet, dass**
die Gerüststützen in der Diagonalrichtung mit Spannbalken (14) aus Edelstahl verbunden sind.

10. Bodenwanne nach einem der Ansprüche 1 oder 9,
**dadurch gekennzeichnet, dass**
der Schutzboden (3) aus Schildern mit erhöhter Festigkeit ausgeführt ist, die neben den lösbaren Verbindungen auch mit steuerbaren Rastelementen ausgestattet sind, die das Schildherausfallen bei dessen Demontage verhindern.

## Claims

1. Floor pan for high-speed trains which is to be arranged under a car floor (1) over the entire length of the underfloor space and is embodied as a framework (2) which is encased with a protective floor (3) and lateral carrier walls (4) having the side panels (5) attached thereto
**characterized in that**
the framework (2) constitutes arcuate supports (10) which are to be connected to car-body longitudinal beams (11), in each case in opposite directions to one another, and connecting free support ends causes said supports (10) to form a transverse profile with frictional engagement.

2. Floor pan as claimed in Claim 1,
**characterized in that**
the side panels (5) are embodied as cell structures and are mounted in a removable fashion on the side walls (4).

3. Floor pan as claimed in Claim 2,
**characterized in that**
releasable connections in the form of screws (6) are used for mounting the side panels (5) onto the side walls (4).

4. Floor pan as claimed in Claim 3,
**characterized in that**
the screws (6) are arranged within a pot (7) which is attached in associated side panels (5).

5. Floor pan as claimed in Claim 4,
**characterized in that**
the pot (7) is provided on its inner face with a locking ring (8) for preventing screws from falling out.

6. Floor pan as claimed in one of Claims 4 or 5,
**characterized in that**
the pot (7) is screwed into the framework (2) by means of a thread and is attached to a latching element (4) in the framework (2).

7. Floor pan as claimed in one of Claims 1 or 6,
**characterized in that**
individual side panels (5) are embodied with maintenance flaps (12) in the region of car assemblies.

8. Floor pan as claimed in one of Claims 1 or 7,
**characterized in that**
individual side panels (5) are provided with grill openings (1b).

9. Floor pan as claimed in one of Claims 1 or 8,
**characterized in that**
the framework supports are connected in the diagonal direction to clamping beams (14) made of stainless steel.

10. Floor pan as claimed in one of Claims 1 or 9,
**characterized in that**
the protective floor (3) is embodied from plates with increased strength, which plates are not only equipped with the releasable connections but also with controllable latching elements which prevent the plates from dropping out during its disassembly.

## Revendications

1. Carénage de dessous de caisse pour trains à grande vitesse, qui est disposé sous un plancher ( 1 ) de voiture sur toute une longueur d'un espace sous caisse et qui est réalisé sous la forme d'un cadre ( 2 ), qui est habillé d'un fond ( 3 ) de protection et de parois ( 4 ) porteuses latérales, sur lesquelles sont fixées des plaques ( 5 ) latérales,
**caractérisé en ce que**
le cadre ( 2 ) représente des appuis ( 10 ) arqués, qui peuvent être fixés à des longerons ( 11 ) de la caisse de voiture respectivement en sens opposé et qui forment, par liaison de leurs extrémités d'appui libres, un profil transversal à fermeture par force.

2. Carénage de dessous de caisse suivant la revendication 1,
**caractérisé en ce que**
les plaques ( 5 ) latérales sont réalisées sous la forme de constructions cellulaires et sont montées sur les parois ( 4 ) latérales de manière à pouvoir être démontées.

3. Carénage de dessous de caisse suivant la revendication 2,
**caractérisé en ce que**
des liaisons amovibles sous la forme de vis ( 6 ) sont utilisées pour le montage des plaques ( 5 ) latérales sur les parois ( 4 ) latérales.

4. Carénage de dessous de caisse suivant la revendication 3,
**caractérisé en ce que**
les vis ( 6 ) sont disposées à l'intérieur d'un pot ( 7 ) fixé dans des plaques ( 5 ) latérales associées.

5. Carénage de dessous de caisse suivant la revendication 4,
**caractérisé en ce que**
le pot ( 7 ) est pourvu, pour prévenir une chute de vis, d'un anneau ( 8 ) de fixation sur sa surface intérieure.

6. Carénage de dessous de caisse suivant l'une des revendications 4 ou 5,
**caractérisé en ce que**
le pot ( 7 ) est introduit par rotation dans le cadre ( 2 ) par l'intermédiaire d'un filetage et fixé au cadre ( 2 ) par un élément ( 4 ) d'encliquetage.

7. Carénage de dessous de caisse suivant l'une des revendications 1 ou 6,
**caractérisé en ce que**
des plaques ( 5 ) latérales individuelles sont réalisées en ayant des volets ( 12 ) d'entretien dans la zone de groupes de voitures.

8. Carénage de dessous de caisse suivant l'une des revendications 1 ou 7,
**caractérisé en ce que**
des plaques ( 5 ) latérales individuelles sont munies d'ouvertures ( 1 ) grillagées.

9. Carénage de dessous de caisse suivant l'une des revendications 1 ou 8,
**caractérisé en ce que**
les appuis du cadre sont reliés dans la direction diagonale par des poutrelles ( 14 ) de serrage en acier fin.

10. Carénage de dessous de caisse suivant l'une des revendications 1 ou 9,
**caractérisé en ce que**
le fond ( 3 ) de protection est réalisé en flasques de grande rigidité, qui sont équipés, outre des liaisons amovibles, également d'éléments d'encliquetage, qui peuvent être réglés et qui empêchent la chute du flasque à son démontage.
